# EUROPÄISCHE PATENTSCHRIFT

(11) **EP 3 230 131 B1**
(45) Veröffentlichungstag und Bekanntmachung des Hinweises auf die Patenterteilung: **20.02.2019**
(21) Anmeldenummer: 15808352.7
(22) Anmeldetag: 10.12.2015
(51) Int. Cl.: B60R 25/00

(54) **VERFAHREN ZUR STEUERUNG DES BETRIEBS WENIGSTENS EINER FUNKTIONSKOMPONENTE EINES KRAFTFAHRZEUGS UND KRAFTFAHRZEUG**
METHOD FOR CONTROLLING THE OPERATION OF AT LEAST ONE FUNCTIONAL COMPONENT OF A MOTOR VEHICLE AND MOTOR VEHICLE
PROCÉDÉ DE COMMANDE DU FONCTIONNEMENT D'AU MOINS UN COMPOSANT FONCTIONNEL D'UN VÉHICULE AUTOMOBILE ET VÉHICULE AUTOMOBILE

(30) Priorität: 11.12.2014 DE 102014018460
(43) Veröffentlichungstag der Anmeldung: 18.10.2017
(73) Patentinhaber: Audi AG, 85045 Ingolstadt (DE); VOLKSWAGEN AG, 38436 Wolfsburg (DE)
(72) Erfinder: BRAHNER, Tom, 85055 Ingolstadt (DE); PLEBAN, Florian, 93077 Bad Abbach (DE); ESCHERICH, Robert, 85113 Böhmfeld (DE); AUGUSTIN, Ralf, 85049 Ingolstadt (DE); HACKSTEIN, Boris, 38442 Wolfsburg (DE)
(74) Vertreter: Brandt, Kai
(86) Internationale Anmeldenummer: PCT/EP2015/002487
(87) Internationale Veröffentlichungsnummer: WO 2016/091388

(56) Entgegenhaltungen:
- DE-A1- 10 118 298
- DE-A1- 19 720 285
- DE-A1-102005 024 818
- DE-A1-102011 077 475
- US-A1- 2009 153 311

## Beschreibung

Die Erfindung betrifft ein Verfahren zur Steuerung des Betriebs wenigstens einer Funktionskomponente eines Kraftfahrzeugs.

Die Problematik des unautorisierten Austauschs bestimmter kraftfahrzeugseitiger Funktionskomponenten, bei welcher Originalkomponenten des Kraftfahrzeugs durch, z. B. gestohlene, Funktionskomponenten nicht autorisiert ausgetauscht werden sowie die Problematik der nicht autorisierten Manipulation bestimmter kraftfahrzeugseitiger Funktionskomponenten ist bekannt.

Ein solcher nicht autorisierter Austausch bzw. eine solche nicht autorisierte Manipulation kann durch eine Authentifizierung zwischen jeweiligen Funktionskomponenten und einer Steuereinrichtung erkannt werden. Die Authentifizierung kann z. B. über eine so genannte Challenge-Response-Authentifizierung realisiert werden, bei welcher zwischen jeweiligen Funktionskomponenten verschlüsselte Informationen, z. B. in Form von Zahlencodes, sowie funktionskomponentenspezifische Entschlüsselungsergebnisse jeweiliger verschlüsselter Informationen ausgetauscht werden. Stimmen die zwischen jeweiligen Funktionskomponenten ausgetauschten Entschlüsselungsergebnisse überein, ist eine erfolgreiche Authentifizierung gegeben. Stimmen die zwischen jeweiligen Funktionskomponenten ausgetauschten Entschlüsselungsergebnisse nicht überein, ist eine erfolgreiche Authentifizierung nicht gegeben.

Bei einer nicht erfolgreichen Authentifizierung einer Funktionskomponente ist es bis dato gängig, die Funktionalität zumindest dieser Funktionskomponente gezielt zu beschränken, um einem Fahrzeuginsassen die nicht erfolgreiche Authentifizierung bestimmter Funktionskomponente zu bedeuten zu geben.

Für den Fall bekannt, in welchem für den Fahrbetrieb sicherheits- und/oder emissionsrelevante Funktionskomponenten des Kraftfahrzeugs nicht erfolgreich authentifiziert werden konnten, kann dieses Vorgehen jedoch nicht verfolgt werden, da entsprechende für den Fahrbetrieb sicherheits- und/oder emissionsrelevante Funktionskomponenten in ihrer Funktionalität grundsätzlich nicht beschränkt werden sollen.

DE102005024818 A1 offenbart ein Verfahren zur Sicherstellung des Einsatzes von identifizierbaren Geräten in einem Fahrzeug. Nach Ablauf einer vorgegebenen gespeicherten Zeitspanne wird mindestens eine Komforteigenschaft jedes nicht identifizierbaren Gerätes gestört.

Der Erfindung liegt die Aufgabe zugrunde, ein demgegenüber verbessertes Verfahren zur Steuerung des Betriebs wenigstens einer Funktionskomponente eines Kraftfahrzeugs anzugeben.

Die Aufgabe wird durch ein Verfahren zur Steuerung des Betriebs wenigstens einer Funktionskomponente eines Kraftfahrzeugs gelöst, welches sich durch die folgenden Schritte auszeichnet:
- Durchführung einer Authentifizierung wenigstens einer für den Fahrbetrieb des Kraftfahrzeugs sicherheits- und/oder emissionsrelevanten Funktionskomponente im Hinblick darauf, ob es sich bei der Funktionskomponente um eine Originalkomponente des Kraftfahrzeugs oder um eine nicht autorisiert ausgetauschte und/oder nicht autorisiert manipulierte Funktionskomponente handelt, und
- Steuerung des Betriebs wenigstens einer anderen Funktionskomponente des Kraftfahrzeugs derart, dass die oder wenigstens eine Funktionalität der wenigstens einen anderen Funktionskomponente gezielt beschränkt wird, sofern die durchgeführte Authentifizierung ergibt, dass die wenigstens eine für den Fahrbetrieb des Kraftfahrzeugs sicherheits- und/oder emissionsrelevante Funktionskomponente des Kraftfahrzeugs nicht autorisiert ausgetauscht und/oder nicht autorisiert manipuliert ist, wobei die andere Funktionskomponente eine für den Fahrbetrieb des Kraftfahrzeugs nicht sicherheitsrelevante Funktionskomponente ist.

Wenngleich vorstehend nur zwei wesentliche Schritte des Verfahrens genannt sind, kann das Verfahren, wie sich im Weiteren ergibt, weitere Schritte umfassen, welche vor, nach oder zwischen dem vorstehend genannten ersten und zweiten Schritt erfolgen.

Das hierin beschriebene Verfahren zur Steuerung des Betriebs wenigstens einer Funktionskomponente eines Kraftfahrzeugs ist grundsätzlich dem Bereich des Diebstahlschutzes bestimmter, d. h. insbesondere für den Fahrbetrieb sicherheits- und/oder emissionsrelevanter, Funktionskomponenten des Kraftfahrzeugs zugehörig. Über das Verfahren lässt sich ein unautorisierter Austausch bzw. eine unautorisierte Manipulation insbesondere sicherheits- und/oder emissionsrelevanter Funktionskomponenten für einen Fahrzeuginsassen bemerkbar machen ohne ein Sicherheitsrisiko für den Fahrbetrieb bzw. eine Erhöhung der Emissionen bzw. des damit typischerweise zusammenhängenden Verbrauchs für den Fahrbetrieb zu schaffen. Aufgrund bestimmter gesetzlicher Vorgaben, z. B. in den USA, kann es sein, dass eine Erhöhung der Emissionen bzw. des Verbrauchs des Kraftfahrzeugs nicht ohne einen Hinweis an einen Fahrzeuginsassen, insbesondere den Fahrer, bzw. eine Meldung an eine Behörde erfolgen darf.

In einem ersten Schritt des Verfahrens wird eine Authentifizierung wenigstens einer für den Fahrbetrieb des Kraftfahrzeugs sicherheits- und/oder emissionsrelevanten Funktionskomponente im Hinblick darauf, ob es sich bei der Funktionskomponente um eine Originalkomponente des Kraftfahrzeugs oder um eine nicht autorisiert ausgetauschte und/oder nicht autorisiert manipulierte Funktionskomponente handelt, durchgeführt. Derartige für den Fahrbetrieb des Kraftfahrzeugs sicherheits- und/oder emissionsrelevante Funktionskomponente werden im Weiteren als erste Funktionskomponenten bezeichnet.

Bei einer solchen ersten Funktionskomponente des Kraftfahrzeugs handelt es sich beispielsweise um einen kraftfahrzeugseitigen elektrischen Energiespeicher, insbesondere einen einem kraftfahrzeugseitigen Antriebsaggregat zuordenbaren oder zugeordneten elektrischen Energiespeicher, kurz einen Traktionsenergiespeicher, respektive eine diesem zugehörige Steuerungselektronik. Ein derartiger Traktionsenergiespeicher ist im Hinblick auf den Fahrbetrieb sowohl sicherheits- als auch emissionsrelevant. Letzteres ergibt sich für das Beispiel eines Hybridkraftfahrzeugs, welches neben einem über einen entsprechenden Traktionsenergiespeicher versorgten Antriebsaggregat in Form eines Elektromotors auch wenigstens ein weiteres Antriebsaggregat in Form eines Verbrennungsmotors aufweist, im Hinblick auf die Sicherheitsrelevanz daraus, dass eine Funktionsbeschränkung oder Deaktivierung eines Antriebsaggregats grundsätzlich von sicherheitsrelevanter Bedeutung für den Fahrbetrieb ist, und im Hinblick auf die Emissionsrelevanz daraus, dass durch eine Deaktivierung des Elektromotors bzw. einen alleinigen Antrieb des Kraftfahrzeugs über den oder die Verbrennungsmotor(en) die Emissionen im Fahrbetrieb erhöht werden.

In dem ersten Schritt des Verfahrens kann sonach z. B. eine Authentifizierung der einem entsprechenden elektrischen Energiespeicher zugehörigen Steuerungselektronik dahin erfolgen, ob es sich bei dieser um die originale Steuerungselektronik oder um eine nicht autorisiert ausgetauschte und/oder nicht autorisiert manipulierte Steuerungselektronik handelt.

Sofern die in dem ersten Schritt des Verfahrens durchgeführte Authentifizierung ergibt, dass die wenigstens eine erste Funktionskomponente nicht autorisiert ausgetauscht und/oder nicht autorisiert manipuliert ist, erfolgt in einem zweiten Schritt des Verfahrens eine Steuerung des Betriebs wenigstens einer anderen Funktionskomponente des Kraftfahrzeugs derart, dass die oder wenigstens eine Funktionalität der wenigstens einen anderen Funktionskomponente gezielt beschränkt wird.

Wesentlich ist also, dass bei einer nicht erfolgreichen Authentifizierung wenigstens einer ersten Funktionskomponente (d. h. bei wenigstens einer für den Fahrbetrieb des Kraftfahrzeugs sicherheits- und/oder emissionsrelevanten Funktionskomponente) steuerungstechnisch gezielt in den Betrieb wenigstens einer anderen, für den Fahrbetrieb des Kraftfahrzeugs nicht sicherheitsrelevanten, Funktionskomponente, eingegriffen wird, derart, dass die oder wenigstens eine Funktionalität der wenigstens einen anderen Funktionskomponente gezielt beschränkt bzw. beeinflusst wird. Die Funktionalität bzw. Funktionsbereitschaft und somit der Betrieb der nicht erfolgreich authentifizierten ersten Funktionskomponente wird daher unabhängig von dem Ergebnis der Authentifizierung nicht beeinträchtigt.

Im Zusammenhang mit dem vorstehend erwähnten Beispiel eines elektrischen Energiespeichers als entsprechende erste Funktionskomponente wird der nicht autorisierte Einbau eines, z. B. gestohlenen, elektrischen Energiespeichers damit "unattraktiv". Eine auf einen nicht autorisierten Austausch zurückzuführende negative Authentifizierung des elektrischen Energiespeichers beschränkt nämlich die Funktionalität wenigstens einer anderen Funktionskomponente. Analoges gilt für den nicht autorisierten Austausch anderer erster und somit für den Fahrbetrieb sicherheits- und/oder emissionsrelevanter Funktionskomponenten sowie für eine nicht autorisierte Manipulation anderer erster Funktionskomponenten.

Unabhängig von der Art der zu authentifizierenden Funktionskomponente(n) kann die Authentifizierung über beliebige Authentifizierungsverfahren erfolgen. Lediglich beispielhaft wird als ein mögliches Authentifizierungsverfahren auf die eingangs genannte Challenge-Response-Authentifizierung verwiesen, bei welcher zwischen jeweiligen Funktionskomponenten respektive zwischen diesen zugehörigen Steuergeräten verschlüsselte Informationen, z. B. in Form von, typischerweise randomisierten, Zahlencodes, sowie funktionskomponentenspezifische Entschlüsselungsergebnisse jeweiliger verschlüsselter Informationen ausgetauscht werden. Stimmen die zwischen jeweiligen Funktionskomponenten ausgetauschten Entschlüsselungsergebnisse überein, ist eine erfolgreiche Authentifizierung gegeben. Stimmen die zwischen jeweiligen Funktionskomponenten ausgetauschten Entschlüsselungsergebnisse nicht überein, ist eine erfolgreiche Authentifizierung nicht gegeben.

Unter einem nicht autorisierten Austausch bzw. einer nicht autorisierten Manipulation ist insbesondere ein nicht auf Wunsch des Fahrzeuginhabers oder - halters fachmännisch, typischerweise in einer Werkstatt, durchgeführter Austausch bzw. eine nicht auf Wunsch des Fahrzeuginhabers oder -halters fachmännisch, typischerweise in einer Werkstatt, durchgeführte Manipulation einer entsprechenden Funktionskomponente des Kraftfahrzeugs zu verstehen. Einem nicht autorisierten Austausch bzw. einer nicht autorisierten Manipulation kann eine kriminelle Absicht des nicht autorisiert Austauschenden bzw. des nicht autorisiert Manipulierenden anhängen.

Unter einer Beschränkung der oder einer Funktionalität einer entsprechenden Funktionskomponente ist typischerweise eine Einschränkung des Funktionsumfangs der oder wenigstens einer Funktionalität der Funktionskomponente, insbesondere im Vergleich zu einem Normalbetrieb, welcher selbstverständlich von, insbesondere alterungs- bzw. nutzungsbedingten, äußeren und inneren Betriebsumständen abhängen kann, zu verstehen. Eine Beschränkung der oder einer Funktionalität kann auch eine vollkommene Deaktivierung der oder einer Funktionalität einer jeweiligen Funktionskomponente bedeuten.

Das Verfahren wird typischerweise über eine zentrale Steuereinrichtung ("Master") implementiert, welche über ein kraftfahrzeugseitiges Datennetzwerk, wie z. B. ein BUS-Netzwerk, mit jeweiligen Funktionskomponenten des Kraftfahrzeugs, d. h. insbesondere mit jeweiligen Steuergeräten jeweiliger Funktionskomponenten des Kraftfahrzeugs, kommuniziert. Über die zentrale Steuereinrichtung lässt sich sowohl die Authentifizierung von Funktionskomponenten durchführen als auch steuerungstechnisch in den Betrieb und somit in die öder wenigstens eine Funktionalität von Funktionskomponenten eingreifen.

Es ist denkbar, dass vor der Durchführung einer Authentifizierung wenigstens einer ersten Funktionskomponente im Hinblick darauf, ob es sich bei der Funktionskomponente um eine Originalkomponente des Kraftfahrzeugs oder um eine nicht autorisiert ausgetauschte und/oder nicht autorisiert manipulierte Funktionskomponente handelt, eine Durchführung einer Authentifizierung wenigstens einer für sicherheitsrelevante und/oder gesetzliche Vorgaben unabhängig von dem Fahrbetrieb des Kraftfahrzeugs relevante Funktionskomponente des Kraftfahrzeugs im Hinblick darauf, ob es sich bei der Funktionskomponente um eine Originalkomponente des Kraftfahrzeugs oder um eine nicht autorisiert ausgetauschte und/oder nicht autorisiert manipulierte Funktionskomponente handelt, erfolgt. Derartige für sicherheitsrelevante und/oder gesetzliche Vorgaben unabhängig von dem Fahrbetrieb des Kraftfahrzeugs relevante Funktionskomponente des Kraftfahrzeugs werden im Weiteren als zweite Funktionskomponenten bezeichnet. Es ist sonach möglich, der Authentifizierung entsprechender erster Funktionskomponenten eine Authentifizierung wenigstens einer zweiten Funktionskomponente vorzuschalten. Derart kann die Betriebssicherheit jeweiliger zweiter Funktionskomponenten erhöht und bestimmte gesetzliche Vorgaben eingehalten werden. Bei einer zweiten Funktionskomponente kann es sich z. B. um ein kraftfahrzeugseitiges Nachtsichtgerät handeln, welches aufgrund gesetzlicher Vorgaben nicht außerhalb des Kraftfahrzeugs verwendet werden soll. Die Authentifizierung eines entsprechenden Nachtsichtgeräts wird sonach zweckmäßig der Authentifizierung anderer, d. h. insbesondere erster, Funktionskomponenten vorgeschaltet. Das Nachtsichtgerät wird deaktiviert, wenn eine erfolgreiche Authentifizierung nicht möglich ist.

Sofern die durchgeführte Authentifizierung ergibt, dass die wenigstens eine zweite Funktionskomponente nicht autorisiert ausgetauscht und/oder nicht autorisiert manipuliert ist, kann eine Steuerung des Betriebs der wenigstens einen zweiten Funktionskomponente und/oder wenigstens einer anderen Funktionskomponente des Kraftfahrzeugs derart, dass die oder wenigstens eine Funktionalität der wenigstens einen zweiten Funktionskomponente und/oder der wenigstens einen anderen Funktionskomponente gezielt beschränkt wird, erfolgen.

Vor der Durchführung einer Authentifizierung wenigstens einer ersten Funktionskomponente im Hinblick darauf, ob es sich bei der (ersten) Funktionskomponente um eine Originalkomponente des Kraftfahrzeugs oder um eine nicht autorisiert ausgetauschte und/oder nicht autorisiert manipulierte Funktionskomponente handelt, oder vor der Durchführung einer Authentifizierung wenigstens einer zweiten Funktionskomponente im Hinblick darauf, ob es sich bei der (zweiten) Funktionskomponente um eine Originalkomponente des Kraftfahrzeugs oder um eine nicht autorisiert ausgetauschte und/oder nicht autorisiert manipulierte Funktionskomponente handelt, kann eine Durchführung einer Zustandsabfrage einer eine unbefugte Inbetriebnahme des Kraftfahrzeugs verhindernden Einrichtung erfolgen. Bei einer solchen Einrichtung kann es sich z. B. um eine kraftfahrzeugseitige Wegfahrsperre handeln.

In diesem Fall kann die Durchführung einer Authentifizierung wenigstens einer ersten Funktionskomponente im Hinblick darauf, ob es sich bei der Funktionskomponente um eine Originalkomponente des Kraftfahrzeugs oder um eine nicht autorisiert ausgetauschte und/oder nicht autorisiert manipulierte Funktionskomponente handelt, oder die Durchführung einer Authentifizierung wenigstens einer zweiten Funktionskomponente des Kraftfahrzeugs im Hinblick darauf, ob es sich bei der Funktionskomponente um eine Originalkomponente des Kraftfahrzeugs oder um eine nicht autorisiert ausgetauschte und/oder nicht autorisiert manipulierte Funktionskomponente handelt, erst bzw. nur dann erfolgen, wenn die Zustandsabfrage ergibt, dass keine unbefugte Inbetriebnahme des Kraftfahrzeugs gegeben ist.

Mithin kann eine entsprechende eine unbefugte Inbetriebnahme des Kraftfahrzeugs verhindernde Einrichtung in das Verfahren eingebunden werden. Dies ist insofern zweckmäßig, als über eine entsprechende Einrichtung eine Authentifizierung eines Zündschlüssels oder sonstigen Elements zum Anlassen bzw. Starten des Kraftfahrzeugs, d. h. insbesondere eines kraftfahrzeugseitigen Antriebsaggregats, geprüft werden kann und so ein (versuchtes) unautorisiertes Anlassen bzw. Starten des Kraftfahrzeugs eine Authentifizierung weiterer Funktionskomponenten verhindert. Ohne eine solche Authentifizierung können diese Funktionskomponenten typischerweise nicht in Betrieb genommen werden. Derart ist der mit dem Verfahren realisierbare Diebstahlschutz verbessert.

Wie erwähnt, kann, sofern die durchgeführte Authentifizierung ergibt, dass die wenigstens eine erste Funktionskomponente des Kraftfahrzeugs nicht autorisiert ausgetauscht und/oder nicht autorisiert manipuliert ist, als wenigstens eine andere Funktionskomponente des Kraftfahrzeugs eine für den Fahrbetrieb des Kraftfahrzeugs nicht sicherheitsrelevante Funktionskomponente gezielt in ihrer oder wenigstens einer Funktionalität beschränkt werden. Derartige für den Fahrbetrieb des Kraftfahrzeugs nicht sicherheitsrelevante Funktionskomponente werden im Weiteren als dritte Funktionskomponenten bezeichnet.

Nachfolgend werden Beispiele entsprechender dritter und somit für den Fahrbetrieb des Kraftfahrzeugs nicht sicherheitsrelevanter Funktionskomponenten gegeben.

Bei einer dritten Funktionskomponente kann es sich z. B. um eine Multimediaeinrichtung zur Ausgabe von Multimediainhalten in den Innenraum des Kraftfahrzeugs oder an einen Kommunikationspartner, wie z. B. ein fahrzeuginsassenseitiges mobiles Endgerät, z. B. ein Handy, Smartphone, Notebook, Tablet, etc., eine Kommunikationseinrichtung zur Herstellung einer Kommunikationsverbindung zwischen einem kraftfahrzeugseitigen Steuergerät und einem Kommunikationspartner, wie z. B. einem fahrzeuginsassenseitigen mobilen Endgerät, wie z. B. ein Handy, Smartphone, Notebook, Tablet, etc., eine Klimaeinrichtung zur Klimatisierung zumindest eines Bereichs des Innenraums des Kraftfahrzeugs, eine Sitzverstelleinrichtung zur Verstellung wenigstens einer Ausrichtung und/oder Position wenigstens eines Sitzteils des Kraftfahrzeugs relativ zu wenigstens einem anderen Sitzteil des Kraftfahrzeugs, eine Sitztemperiereinrichtung zur Temperierung wenigstens eines Sitzteils des Kraftfahrzeugs, eine Lenkradtemperiereinrichtung zur Temperierung wenigstens eines Lenkradteils des Kraftfahrzeugs, eine Beleuchtungseinrichtung zur Beleuchtung des Innenraums des Kraftfahrzeugs, aber auch um ein Parkassistenzsystem zur Durchführung zumindest teilautomatisierter Parkvorgänge des Kraftfahrzeugs handeln. Aus obiger, nicht abschließender, Aufzählung ergibt sich, dass es sich bei entsprechenden dritten Funktionskomponenten insbesondere um so genannte Komforteinrichtungen zur Erhöhung des Komforts von Fahrzeuginsassen handelt.

Als konkretes Beispiel einer entsprechenden Beschränkung des Betriebs einer dritten Funktionskomponente in Form einer Multimediaeinrichtung kann z. B. ein bestimmtes Multimediaprogramm, wie z. B. ein bestimmter TV- und/oder Radiosender, eine bestimmte Bild- und/oder Toneinstellung, insbesondere Lautstärkeeinstellung, fest vorgegeben oder nicht verfügbar sein. Analoges gilt für die Beschränkung der oder wenigstens einer Funktionalität anderer dritter Funktionskomponenten.

Alternativ oder ergänzend kann, sofern die durchgeführte Authentifizierung ergibt, dass die wenigstens eine erste Funktionskomponente des Kraftfahrzeugs nicht autorisiert ausgetauscht und/oder nicht autorisiert manipuliert ist, als wenigstens eine andere Funktionskomponente des Kraftfahrzeugs prinzipiell auch eine weitere erste und somit für den Fahrbetrieb des Kraftfahrzeugs sicherheits- und/oder emissionsrelevante Funktionskomponente gezielt in ihrer oder wenigstens einer Funktionalität beschränkt werden. Bei dieser weiteren ersten Funktionskomponente handelt es sich nicht um die zuvor authentifizierte erste Funktionskomponente.

Um durch eine Beschränkung der oder wenigstens einer Funktionalität einer weiteren ersten Funktionskomponente kein Sicherheitsrisiko zu schaffen, wird vor einer Beschränkung der oder wenigstens einer Funktionalität einer weiteren ersten Funktionskomponente zweckmäßig eine eine bevorstehende bzw. gegebene Beschränkung der weiteren ersten Funktionskomponente beschreibende Beschränkungsinformation an wenigstens einen Fahrzeuginsassen, insbesondere einen Fahrer, ausgegeben. Ein Fahrzeuginsasse, insbesondere der Fahrer, kann sonach vermittels einer entsprechenden Beschränkungsinformation auf eine bevorstehende oder gegebene Beschränkung der oder wenigstens einer Funktionalität einer weiteren ersten Funktionskomponente hingewiesen werden. Die Beschränkungsinformation kann über geeignete Ausgabeeinrichtungen, wie z. B. Lautsprecher und/oder Displays und/oder Vibrationseinrichtungen akustisch und/oder optisch und/oder haptisch ausgegeben werden. Eine Beschränkungsinformation kann z. B. in Form des Aufleuchtens einer Signalleuchte oder -darstellung, gegebenenfalls kombiniert mit einem Warnton, ausgegeben werden.

Als eine gegebenenfalls in ihrer oder wenigstens einer Funktionalität beschränkte, weitere erste und somit für den Fahrbetrieb sicherheitsrelevante und/oder emissionsrelevante Funktionskomponente kann im Rahmen des Verfahrens z. B. ein den Fahrbetrieb mittelbar oder unmittelbar steuerndes Assistenzsystem bzw. Fahrerassistenzsystem, insbesondere ein Assistenzsystem bzw. Fahrerassistenzsystem zur zumindest teilautomatisierten Längs- und/oder Querführung des Kraftfahrzeugs, oder eine Beleuchtungs- oder Scheinwerfereinrichtung zur Beleuchtung des Außenraums um das Kraftfahrzeug vorgesehen werden. Wie erwähnt, wird dem oder den Fahrzeuginsassen eine bevorstehende bzw. gegebene Beschränkung der oder wenigstens einer Funktionalität einer solchen für den Fahrbetrieb sicherheits- und/oder emissionsrelevanten weiteren ersten Funktionskomponente zweckmäßig vermittels einer entsprechenden Beschränkungsinformation kenntlich gemacht.

Sofern bei der Durchführung der Authentifizierung, insbesondere einer ersten Funktionskomponente, kein Authentifizierungsergebnis erstellt werden kann, kann eine bestimmte Anzahl an Authentifizierungsversuchen durchgeführt werden. Dabei wird die oder wenigstens eine Funktionalität der wenigstens einen anderen Funktionskomponente gezielt beschränkt, sofern nach der Durchführung der bestimmten Anzahl an Authentifizierungsversuchen weiterhin kein Authentifizierungsergebnis erstellt wurde. Im Rahmen der Durchführung der Authentifizierung erfolgende Authentifizierungsversuche können sonach, z. B. über implementierte Zähler, erfasst werden. Bei Überschreiten einer vorgebbaren oder vorgegebenen Anzahl an Authentifizierungsversuchen, d. h. z. B. 10 erfolglosen Authentifizierungsversuchen, kann - analog zu dem Fall eines nicht autorisierten Austauschs bzw. einer nicht autorisierten Manipulation einer entsprechenden Funktionskomponente - eine gezielte Beschränkung der oder wenigstens einer Funktionalität einer anderen Funktionskomponente erfolgen. Derart ist die Zuverlässigkeit des Verfahrens insbesondere im Hinblick auf die Erfassung nicht autorisiert ausgetauschter bzw. nicht autorisiert manipulierter Funktionskomponente gesteigert.

Mit der gleichen Zielrichtung kann die oder wenigstens eine Funktionalität der wenigstens einen anderen Funktionskomponente des Kraftfahrzeugs gezielt beschränkt werden, sofern bei der Durchführung der Authentifizierung innerhalb einer bestimmten Zeitspanne kein Authentifizierungsergebnis erstellt wurde. Die Durchführung der Authentifizierung kann, z. B. über implementierte Zeitmesseinrichtungen, zeitlich erfasst werden. Bei einer entsprechenden Zeitspanne kann es sich z. B. um einen Zeitraum zwischen 1 und 30 Sekunden handeln. Selbstverständlich kann die Zeitspanne auch kürzer oder länger gewählt sein.

Die Erfindung betrifft ferner ein Kraftfahrzeug mit mehreren, insbesondere im Hinblick auf deren Sicherheitsrelevanz für den Fahrbetrieb, unterschiedlichen Funktionskomponenten und einer Steuereinrichtung. Die Steuereinrichtung ist, insbesondere gemäß dem beschriebenen Verfahren, zur
- Durchführung einer Authentifizierung wenigstens einer für den Fahrbetrieb des Kraftfahrzeugs sicherheits- und/oder emissionsrelevanten ersten Funktionskomponente im Hinblick darauf, ob es sich bei der Funktionskomponente um eine Originalkomponente des Kraftfahrzeugs oder um eine nicht autorisiert ausgetauschte und/oder nicht autorisiert manipulierte Funktionskomponente handelt, und zur
- Steuerung des Betriebs wenigstens einer anderen Funktionskomponente des Kraftfahrzeugs derart, dass die oder wenigstens eine Funktionalität der wenigstens einen anderen Funktionskomponente gezielt beschränkt wird, sofern die durchgeführte Authentifizierung ergibt, dass die wenigstens eine für den Fahrbetrieb des Kraftfahrzeugs sicherheits- und/oder emissionsrelevante erste Funktionskomponente des Kraftfahrzeugs nicht autorisiert ausgetauscht und/oder nicht autorisiert manipuliert ist, eingerichtet, wobei die andere Funktionskomponente eine für den Fahrbetrieb des Kraftfahrzeugs nicht sicherheitsrelevante Funktionskomponente ist.

Für das Kraftfahrzeug gelten sämtliche Ausführungen im Zusammenhang mit dem Verfahren analog.

Weitere Vorteile, Merkmale und Einzelheiten der Erfindung ergeben sich aus der nachfolgenden Beschreibung bevorzugter Ausführungsbeispiele sowie anhand der Zeichnung. Dabei zeigt:
- Fig. 1: eine Prinzipdarstellung eines Kraftfahrzeugs gemäß einem Ausführungsbeispiel; und
- Fig. 2: ein Ablaufdiagramm eines Verfahrens zur Steuerung des Betriebs wenigstens einer Funktionskomponente eines Kraftfahrzeugs gemäß einem Ausführungsbeispiel.

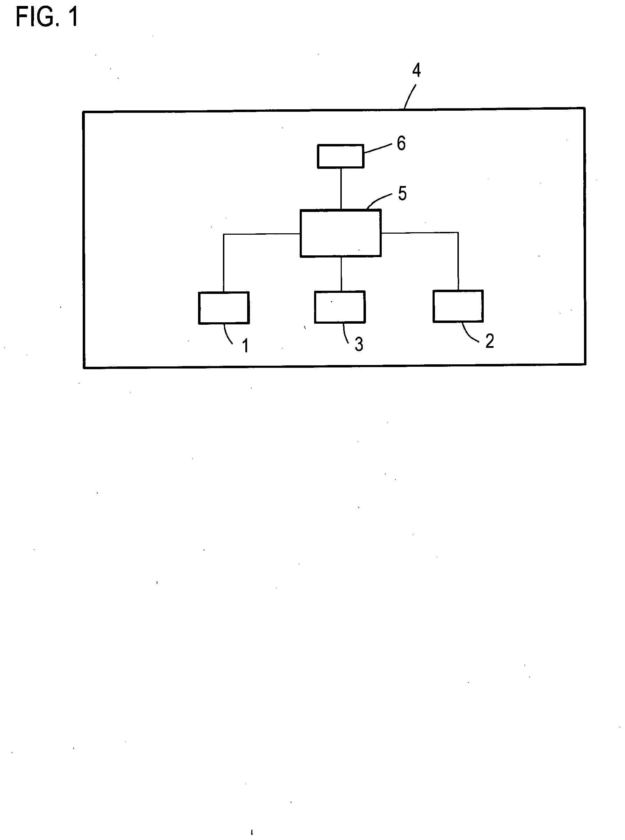

Fig. 1 zeigt eine Prinzipdarstellung eines Kraftfahrzeugs 4 gemäß einem Ausführungsbeispiel. Das Kraftfahrzeug 4 umfasst eine Anzahl an Funktionskomponenten 1, 2, 3 mit jeweiligen Steuergeräten (nicht gezeigt) und eine mit diesen über ein kraftfahrzeugseitiges Datennetzwerk, insbesondere ein zentrales BUS-Netzwerk, wie einen CAN-Bus, kommunizierende Steuereinrichtung 5.

Bei der Funktionskomponente 1 handelt es sich um eine für den Fahrbetrieb des Kraftfahrzeugs 4 sicherheits- und/oder emissionsrelevante Funktionskomponente, nämlich einen elektrischen Energiespeicher. Über den elektrischen Energiespeicher wird wenigstens ein kraftfahrzeugseitiges Antriebsaggregat (nicht gezeigt) mit elektrischer Energie versorgt. Bei dem elektrischen Energiespeicher handelt es sich sonach um einen Traktionsenergiespeicher. Folglich kann es sich bei dem Kraftfahrzeug 4 um ein so genanntes Hybrid-Kraftfahrzeug, welches wenigstens ein mit elektrischer Energie antreibbares Antriebsaggregat in Form eines Elektromotors und ein weiteres Antriebsaggregat in Form eines Verbrennungsmotors umfasst, handeln. Wenngleich nur eine einzige Funktionskomponente 1 dargestellt ist, sind typischerweise mehrere für den Fahrbetrieb des Kraftfahrzeugs 4 sicherheits- und/oder emissionsrelevante Funktionskomponenten 1 vorhanden. Insbesondere kann ein den Fahrbetrieb mittelbar oder unmittelbar steuerndes Assistenzsystem, beispielsweise ein Assistenzsystem zur zumindest teilautomatisierten Längs- und/oder Querführung des Kraftfahrzeugs 4, und/oder eine Beleuchtungs- oder Scheinwerfereinrichtung zur Beleuchtung des Außenraums um das Kraftfahrzeug 4, als weitere für den Fahrbetrieb des Kraftfahrzeugs 4 sicherheits- und/oder emissionsrelevante Funktionskomponente 1 vorhanden sein. Entsprechende für den Fahrbetrieb des Kraftfahrzeugs 4 sicherheits- und/oder emissionsrelevante Funktionskomponenten 1 werden im Weiteren als erste Funktionskomponenten 1 bezeichnet.

Bei der Funktionskomponente 2 handelt es sich um eine für sicherheitsrelevante und/oder gesetzliche Vorgaben unabhängig von dem Fahrbetrieb des Kraftfahrzeugs 4 relevante Funktionskomponente, nämlich ein Nachtsichtgerät. Auch für die Funktionskomponente 2 gilt, dass, wenngleich nur eine einzige Funktionskomponente 2 dargestellt ist, selbstverständlich mehrere für sicherheitsrelevante und/oder gesetzliche Vorgaben unabhängig von dem Fahrbetrieb des Kraftfahrzeugs 4 relevante Funktionskomponenten 2 vorhanden sein können. Entsprechende für sicherheitsrelevante und/oder gesetzliche Vorgaben unabhängig von dem Fahrbetrieb des Kraftfahrzeugs 4 relevante Funktionskomponenten 2 werden im Weiteren als zweite Funktionskomponenten 2 bezeichnet.

Bei der Funktionskomponente 3 handelt es sich z. B. um eine für den Fahrbetrieb des Kraftfahrzeugs 4 nicht sicherheitsrelevante Funktionskomponente, nämlich eine, z. B. in einem Kombinationsinstrument des Kraftfahrzeugs 4 verbaute, Multimediaeinrichtung zur Ausgabe von Multimediainhalten, insbesondere Bild- und/oder Toninhalten, in den Innenraum des Kraftfahrzeugs 4 und/oder an einen Kommunikationspartner, wie z. B. ein fahrzeuginsassenseitiges mobiles Endgerät, z. B. in Form eines Handys, Smartphones, Notebooks, Tablets. Wenngleich nur eine einzige Funktionskomponente 3 dargestellt ist, sind typischerweise mehrere für den Fahrbetrieb des Kraftfahrzeugs 4 nicht sicherheitsrelevante Funktionskomponenten 3 vorhanden. Entsprechende für den Fahrbetrieb des Kraftfahrzeugs 4 nicht sicherheitsrelevante Funktionskomponenten 3 werden im Weiteren als dritte Funktionskomponenten 3 bezeichnet.

Als weitere dritte Funktionskomponenten 3 kann z. B. eine Kommunikationseinrichtung zur Herstellung einer Kommunikationsverbindung zwischen einem kraftfahrzeugseitigen Steuergerät und einem Kommunikationspartner, wie z. B. einem fahrzeuginsassenseitigen mobilen Endgerät, wie. z. B. ein Handy, Smartphone, Notebook, Tablet, etc., eine Klimaeinrichtung zur Klimatisierung zumindest eines Bereichs des Innenraums des Kraftfahrzeugs 4, eine Sitzverstelleinrichtung zur Verstellung wenigstens einer Ausrichtung und/oder Position wenigstens eines Sitzteils des Kraftfahrzeugs 4 relativ zu wenigstens einem anderen Sitzteil des Kraftfahrzeugs 4, eine Sitztemperiereinrichtung zur Temperierung wenigstens eines Sitzteils des Kraftfahrzeugs 4, eine Lenkradtemperiereinrichtung zur Temperierung wenigstens eines Lenkradteils des Kraftfahrzeugs 4, eine Beleuchtungseinrichtung zur Beleuchtung des Innenraums des Kraftfahrzeugs 4, aber auch um ein Parkassistenzsystem zur Durchführung zumindest teilautomatisierter Parkvorgänge des Kraftfahrzeugs 4 vorhanden sein. Bei den dritten Funktionskomponenten 3 handelt es sich typischerweise um so genannte Komforteinrichtungen zur Erhöhung des Komforts von Fahrzeuginsassen.

Neben den Funktionskomponenten 1, 2, 3 umfasst das Kraftfahrzeug 4 ferner eine eine unbefugte Inbetriebnahme des Kraftfahrzeugs 4 verhindernde Einrichtung 6. Bei einer solchen Einrichtung 6 handelt es sich um eine kraftfahrzeugseitige Wegfahrsperre.

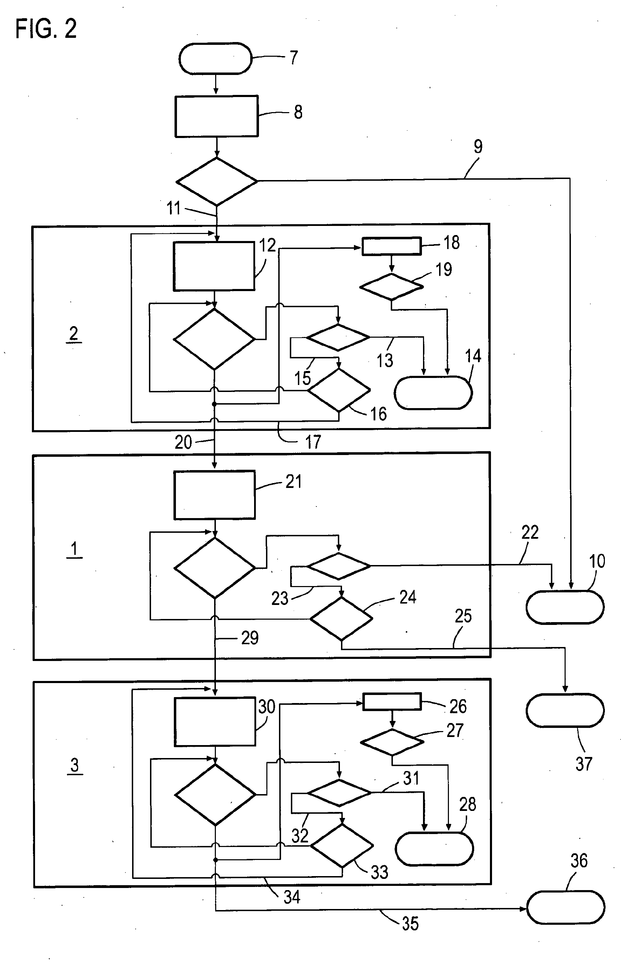

Die Steuereinrichtung 5 ist zur Durchführung eines Verfahrens zur Steuerung des Betriebs jeweiliger Funktionskomponenten 1, 2, 3 eingerichtet. Ein Ausführungsbeispiel des Verfahrens wird im Folgenden unter Bezugnahme auf das in Fig. 2 gezeigte Ablaufdiagramm näher erläutert.

Das im Weiteren unter Bezugnahme auf Fig. 2 beschriebene Verfahren ist grundsätzlich dem Bereich des Diebstahlschutzes bestimmter, d. h. insbesondere erster und somit für den Fahrbetrieb sicherheits- und/oder emissionsrelevanter, Funktionskomponenten 1 des Kraftfahrzeugs 4 zugehörig. Über das Verfahren lässt sich ein unautorisierter Austausch bzw. eine unautorisierte Manipulation insbesondere erster Funktionskomponenten 1 bemerkbar machen ohne ein Sicherheitsrisiko für den Fahrbetrieb des Kraftfahrzeugs 4 bzw. eine Erhöhung der Emissionen bzw. des damit typischerweise zusammenhängenden Verbrauchs für den Fahrbetrieb des Kraftfahrzeugs 4 zu schaffen.

In dem durch den Kasten 7 angedeuteten Schritt erfolgt zunächst ein Starten des Kraftfahrzeugs 4, so dass die Steuereinrichtung 5 in Betrieb genommen wird.

Sodann wird eine Zustandsabfrage der eine unbefugte Inbetriebnahme des Kraftfahrzeugs 4 verhindernden Einrichtung 6 durchgeführt (vgl. Kasten 8). Dies ist zweckmäßig, als über eine entsprechende Einrichtung 6 eine Authentifizierung eines Zündschlüssels oder sonstigen Elements zum Anlassen bzw. Starten des Kraftfahrzeugs 4, d. h. insbesondere eines Antriebsaggregats des Kraftfahrzeugs 4, geprüft werden kann und so ein (versuchter) unautorisierte Anlassen bzw. Starten des Kraftfahrzeugs 4 eine Authentifizierung weiterer Funktionskomponenten 1, 2, 3 verhindert. Ohne eine solche Authentifizierung können diese Funktionskomponenten 1, 2, 3 nicht in Betrieb genommen werden. Bei einem negativen Abfrageergebnis (vgl. Pfeil 9), d. h. es wurde ein (versuchter) unautorisierter Zugriff erfasst, werden bereits an dieser Stelle alle Funktionskomponenten 1, 2, 3 über die Steuereinrichtung 5 in ihrer Funktionalität beschränkt bzw. deaktiviert (vgl. Kasten 10).

Bei einem positiven Abfrageergebnis (vgl. Pfeil 11), d. h. es wurde kein (versuchter) unautorisierter Zugriff erfasst, erfolgt eine Authentifizierung der zweiten und somit für sicherheitsrelevante und/oder gesetzliche Vorgaben unabhängig von dem Fahrbetrieb des Kraftfahrzeugs 4 relevanten Funktionskomponente 2 (vgl. Kasten 12). Die Authentifizierung erfolgt im Hinblick darauf, ob es sich bei der zweiten Funktionskomponente 2 um eine Originalkomponente oder um eine nicht autorisiert ausgetauschte und/oder nicht autorisiert manipulierte Funktionskomponente 2 handelt.

Im Rahmen der Authentifizierung der zweiten Funktionskomponente 2 sind grundsätzlich drei unterschiedliche Szenarien möglich:
Sofern eine negative Authentifizierung der zweiten Funktionskomponente 2 gegeben ist, d. h. es liegt eine nicht autorisiert ausgetauschte und/oder nicht autorisiert manipulierte zweite Funktionskomponente 2 vor (vgl. Pfeil 13), wird die Funktionalität der zweiten Funktionskomponente 2 über einen steuerungstechnischen Eingriff der Steuereinrichtung 5 gezielt beschränkt (vgl. Kasten 14). Hierbei kann es sich auch um eine vollkommene Deaktivierung der zweiten Funktionskomponente 2 handeln.

Sofern eine Authentifizierung der zweiten Funktionskomponente 2 nicht möglich ist bzw. kein Authentifizierungsergebnis erstellt werden kann (vgl. Pfeil 15), wird eine bestimmte Anzahl an weiteren Authentifizierungsversuchen, z. B. zehn weitere Authentifizierungsversuche, durchgeführt (vgl. Kasten 16). Je nachdem, ob eine Authentifizierung möglich ist oder nicht, wird gemäß Pfeil 17 zu Kasten 12 zurückgekehrt.

Die Durchführung der Authentifizierung wird zeitlich überwacht (vgl. Kasten 18). Sofern bei der (versuchten) Durchführung der Authentifizierung der zweiten Funktionskomponente 2 innerhalb einer bestimmten Zeitspanne kein Authentifizierungsergebnis erstellt wurde (vgl. Kasten 19), wird die Funktionalität der zweiten Funktionskomponente 2 über einen steuerungstechnischen Eingriff der Steuereinrichtung 5 gezielt beschränkt (vgl. Kasten 14). Bei einer solchen Zeitspanne kann es sich z. B. um einen Zeitraum zwischen 1 und 30 Sekunden handeln.

Sofern eine positive Authentifizierung der zweiten Funktionskomponente 2 gegeben ist, d. h. es liegt keine nicht autorisiert ausgetauschte und/oder nicht autorisiert manipulierte zweite Funktionskomponente 2 vor (vgl. Pfeil 20), erfolgt eine Authentifizierung der ersten Funktionskomponente 1 (vgl. Kasten 21).

Auch im Rahmen der Authentifizierung der ersten Funktionskomponente 1 sind grundsätzlich drei unterschiedliche Szenarien möglich:
Sofern eine negative Authentifizierung der ersten Funktionskomponente 1 gegeben ist, d. h. es liegt eine nicht autorisiert ausgetauschte und/oder nicht autorisiert manipulierte erste Funktionskomponente 1 vor (vgl. Pfeil 22), wird die Funktionalität wenigstens einer, insbesondere aller, dritter und somit für den Fahrbetrieb des Kraftfahrzeugs 4 nicht sicherheitsrelevanter Funktionskomponenten 3 über einen steuerungstechnischen Eingriff der Steuereinrichtung 5 gezielt beschränkt (vgl. Kasten 10). Hierbei kann es sich auch um eine vollkommene Deaktivierung der dritten Funktionskomponenten 3 handeln.

Als konkretes Beispiel einer entsprechenden Beschränkung des Betriebs einer dritten Funktionskomponente 3 in Form einer Multimediaeinrichtung kann z. B. ein bestimmtes Multimediaprogramm, wie z. B. ein bestimmter TV- und/oder Radiosender, eine bestimmte Bild- und/oder Toneinstellung, insbesondere Lautstärkeeinstellung, fest vorgegeben oder nicht verfügbar sein.

Sofern eine Authentifizierung der ersten Funktionskomponente 1 nicht möglich ist bzw. kein Authentifizierungsergebnis erstellt werden kann (vgl. Pfeil 23), wird eine bestimmte Anzahl an weiteren Authentifizierungsversuchen, z. B. zehn weitere Authentifizierungsversuche, durchgeführt (vgl. Kasten 24). Ist bei Überschreitung der bestimmten Anzahl an Authentifizierungsversuchen eine Authentifizierung der ersten Funktionskomponente 1 weiterhin nicht erfolgt (vgl. Pfeil 25), erfolgt hier eine Beendigung des Authentifizierungsvorgangs (vgl. Kasten 37).

Die Durchführung der Authentifizierung der ersten Funktionskomponente 1 kann zeitlich überwacht werden (vgl. Kasten 26). Sofern bei der (versuchten) Durchführung der Authentifizierung der ersten Funktionskomponente 1 innerhalb einer bestimmten Zeitspanne kein Authentifizierungsergebnis erstellt wurde (vgl. Kasten 27), wird die Funktionalität der ersten Funktionskomponente 1 über einen steuerungstechnischen Eingriff der Steuereinrichtung 5 gezielt beschränkt (vgl. Kasten 28). Bei einer solchen Zeitspanne kann es sich ebenso z. B. um einen Zeitraum zwischen 1 und 30 Sekunden handeln.

Sofern eine positive Authentifizierung der ersten Funktionskomponente 1 gegeben ist, d. h. es liegt keine nicht autorisiert ausgetauschte und/oder nicht autorisiert manipulierte erste Funktionskomponente 1 vor (vgl. Pfeil 29), erfolgt eine Authentifizierung der dritten und somit für den Fahrbetrieb des Kraftfahrzeugs 4 nicht sicherheitsrelevanten Funktionskomponente 3 (vgl. Kasten 30).

Auch im Rahmen der Authentifizierung der dritten Funktionskomponente 3 sind grundsätzlich drei unterschiedliche Szenarien möglich:
Sofern eine negative Authentifizierung der dritten Funktionskomponente 3 gegeben ist, d. h. es liegt eine nicht autorisiert ausgetauschte und/oder nicht autorisiert manipulierte dritte Funktionskomponente 3 vor (vgl. Pfeil 31), wird die Funktionalität der dritten Funktionskomponente 3 über einen steuerungstechnischen Eingriff der Steuereinrichtung 5 gezielt beschränkt (vgl. Kasten 28). Hierbei kann es sich auch um eine vollkommene Deaktivierung der dritten Funktionskomponente 3 handeln.

Sofern eine Authentifizierung der dritten Funktionskomponente 3 nicht möglich ist bzw. kein Authentifizierungsergebnis erstellt werden kann (vgl. Pfeil 32), wird eine bestimmte Anzahl an weiteren Authentifizierungsversuchen, z. B. zehn weitere Authentifizierungsversuche, durchgeführt (vgl. Kasten 33). Je nachdem, ob eine Authentifizierung möglich ist oder nicht, wird gemäß Pfeil 34 zu Kasten 30 zurückgekehrt.

Die Durchführung der Authentifizierung wird, wie erwähnt, zeitlich überwacht (vgl. Kasten 26). Sofern bei der (versuchten) Durchführung der Authentifizierung der dritten Funktionskomponente 3 innerhalb einer bestimmten Zeitspanne kein Authentifizierungsergebnis erstellt wurde (vgl. Kasten 27), wird die Funktionalität der dritten Funktionskomponente 3 über einen steuerungstechnischen Eingriff der Steuereinrichtung 5 gezielt beschränkt (vgl. Kasten 28). Bei einer solchen Zeitspanne kann es sich, wie erwähnt, z. B. um einen Zeitraum zwischen 1 und 30 Sekunden handeln.

Sofern eine positive Authentifizierung der dritten Funktionskomponente 3 gegeben ist, d. h. es liegt keine nicht autorisiert ausgetauschte und/oder nicht autorisiert manipulierte dritte Funktionskomponente 3 vor (vgl. Pfeil 35), werden alle Funktionskomponenten 1, 2, 3 des Kraftfahrzeugs 4 ohne Beschränkung einer Funktionalität in Betrieb genommen (vgl. Kasten 36).

Wesentlich ist, dass bei einer nicht erfolgreichen Authentifizierung wenigstens einer ersten und somit für den Fahrbetrieb des Kraftfahrzeugs 4 sicherheits- und/oder emissionsrelevanten Funktionskomponente 1 steuerungstechnisch gezielt in den Betrieb wenigstens einer anderen Funktionskomponente 2, 3, typischerweise einer für den Fahrbetrieb des Kraftfahrzeugs 4 nicht sicherheitsrelevanten dritten Funktionskomponente 3, eingegriffen wird, derart, dass die oder wenigstens eine Funktionalität der wenigstens einen anderen Funktionskomponente 2, 3 gezielt beschränkt bzw. beeinflusst wird. Die Funktionalität der zu authentifizierenden bzw. authentifizierten für den Fahrbetrieb des Kraftfahrzeugs 4 sicherheits- und/oder emissionsrelevanten ersten Funktionskomponente 1 wird daher unabhängig von dem Ergebnis der Authentifizierung nicht beeinträchtigt.

Die Authentifizierung der Funktionskomponenten 1, 2, 3 können z. B. über eine Challenge-Response-Authentifizierung erfolgen, bei welcher zwischen jeweiligen Funktionskomponenten 1, 2, 3 respektive zwischen diesen zugehörigen Steuergeräten und der Steuereinrichtung 5 verschlüsselte Informationen, z. B. in Form von, typischerweise randomisierten, Zahlencodes, sowie funktionskomponentenspezifische Entschlüsselungsergebnisse jeweiliger verschlüsselter Informationen ausgetauscht werden. Stimmen die zwischen jeweiligen Funktionskomponenten 1, 2, 3 und der Steuereinrichtung 5 ausgetauschten Entschlüsselungsergebnisse überein, ist eine erfolgreiche Authentifizierung gegeben. Stimmen die zwischen jeweiligen Funktionskomponenten 1, 2, 3 und der Steuereinrichtung 5 ausgetauschten Entschlüsselungsergebnisse nicht überein, ist eine erfolgreiche Authentifizierung nicht gegeben.

Im Rahmen des Verfahrens ist es auch möglich, dass, sofern die durchgeführte Authentifizierung ergibt, dass die wenigstens eine erste Funktionskomponente 1 nicht autorisiert ausgetauscht und/oder nicht autorisiert manipuliert ist, als wenigstens eine andere Funktionskomponente des Kraftfahrzeugs 4 prinzipiell auch eine weitere erste und somit für den Fahrbetrieb des Kraftfahrzeugs 4 sicherheits- und/oder emissionsrelevante Funktionskomponente 1, wie z. B. ein Fahrerassistenzsystem zur zumindest teilautomatisierten Längs- und/oder Querführung des Kraftfahrzeugs 4 und/oder eine Beleuchtungs- bzw. Scheinwerfereinrichtung zur Beleuchtung des Außenraums um das Kraftfahrzeug 4, gezielt in ihrer oder wenigstens einer Funktionalität beschränkt wird. Um durch eine Beschränkung der oder wenigstens einer Funktionalität einer weiteren ersten Funktionskomponente 1 kein Sicherheitsrisiko zu schaffen, wird vor einer Beschränkung der oder wenigstens einer Funktionalität einer weiteren ersten Funktionskomponente 1 eine eine bevorstehende bzw. gegebene Beschränkung der weiteren ersten Funktionskomponente 1 beschreibende Beschränkungsinformation an wenigstens einen Fahrzeuginsassen, insbesondere einen Fahrer, ausgegeben. Die Beschränkungsinformation kann über geeignete Ausgabeeinrichtungen (nicht gezeigt), wie z. B. Lautsprecher und/oder Displays und/oder Vibrationseinrichtungen akustisch und/oder optisch und/oder haptisch ausgegeben werden.

## Patentansprüche

1. Verfahren zur Steuerung des Betriebs wenigstens einer Funktionskomponente (1, 2, 3) eines Kraftfahrzeugs (4), mit dem Schritt:
- Durchführung einer Authentifizierung wenigstens einer für den Fahrbetrieb des Kraftfahrzeugs (4) sicherheits- und/oder emissionsrelevanten Funktionskomponente (1) im Hinblick darauf, ob es sich bei der Funktionskomponente (1) um eine Originalkomponente des Kraftfahrzeugs (4) oder um eine nicht autorisiert ausgetauschte und/oder nicht autorisiert manipulierte Funktionskomponente (1) handelt,
**gekennzeichnet durch** den folgenden Schritt:
- Steuerung des Betriebs wenigstens einer anderen Funktionskomponente (2, 3) des Kraftfahrzeugs (4) derart, dass die oder wenigstens eine Funktionalität der wenigstens einen anderen Funktionskomponente (2, 3) gezielt beschränkt wird, sofern die durchgeführte Authentifizierung ergibt, dass die wenigstens eine für den Fahrbetrieb des Kraftfahrzeugs (4) sicherheits- und/oder emissionsrelevante Funktionskomponente (1) nicht autorisiert ausgetauscht und/oder nicht autorisiert manipuliert ist, wobei die andere Funktionskomponente (3) eine für den Fahrbetrieb des Kraftfahrzeugs (4) nicht sicherheitsrelevante Funktionskomponente ist.

2. Verfahren nach Anspruch 1,
**dadurch gekennzeichnet,**
**dass** vor der Durchführung einer Authentifizierung wenigstens einer für den Fahrbetrieb des Kraftfahrzeugs (4) sicherheits- und/oder emissionsrelevanten Funktionskomponente (1) im Hinblick darauf, ob es sich bei der Funktionskomponente (1) um eine Originalkomponente des Kraftfahrzeugs (4) oder um eine nicht autorisiert ausgetauschte und/oder nicht autorisiert manipulierte Funktionskomponente (1) handelt,
eine Durchführung einer Authentifizierung wenigstens einer für sicherheitsrelevante und/oder gesetzliche Vorgaben unabhängig von dem Fahrbetrieb des Kraftfahrzeugs (4) relevante Funktionskomponente (2) des Kraftfahrzeugs (4) im Hinblick darauf, ob es sich bei der Funktionskomponente (2) um eine Originalkomponente des Kraftfahrzeugs (4) oder um eine nicht autorisiert ausgetauschte und/oder nicht autorisiert manipulierte Funktionskomponente (2) handelt, erfolgt.

3. Verfahren nach Anspruch 2,
**dadurch gekennzeichnet,**
**dass** eine Steuerung des Betriebs der der wenigstens einen für sicherheitsrelevante und/oder gesetzliche Vorgaben unabhängig von dem Fahrbetrieb des Kraftfahrzeugs (4) relevanten Funktionskomponente (2) und/oder wenigstens einer anderen Funktionskomponente (3) des Kraftfahrzeugs (4) derart, dass die oder wenigstens eine Funktionalität der wenigstens einen für sicherheitsrelevante und/oder gesetzliche Vorgaben unabhängig von dem Fahrbetrieb des Kraftfahrzeugs (4) relevanten Funktionskomponente (2) und/oder der wenigstens einen anderen Funktionskomponente (3) gezielt beschränkt wird, sofern die durchgeführte Authentifizierung ergibt, dass die wenigstens eine für sicherheitsrelevante und/oder gesetzliche Vorgaben unabhängig von dem Fahrbetrieb des Kraftfahrzeugs (4) relevante Funktionskomponente (2) nicht autorisiert ausgetauscht und/oder nicht autorisiert manipuliert ist.

4. Verfahren nach einem der vorangehenden Ansprüche,
**dadurch gekennzeichnet,**
**dass** vor der Durchführung einer Authentifizierung wenigstens einer für den Fahrbetrieb des Kraftfahrzeugs (4) sicherheits- und/oder emissionsrelevanten Funktionskomponente (1) im Hinblick darauf, ob es sich bei der Funktionskomponente (1) um eine Originalkomponente des Kraftfahrzeugs (4) oder um eine nicht autorisiert ausgetauschte und/oder nicht autorisiert manipulierte Funktionskomponente (1) handelt, oder
vor der Durchführung einer Authentifizierung wenigstens einer im Hinblick auf unabhängig von dem Fahrbetrieb des Kraftfahrzeugs (4) sicherheitsrelevante und/oder gesetzliche Vorgaben relevante Funktionskomponente (2) des Kraftfahrzeugs (4) im Hinblick darauf, ob es sich bei der Funktionskomponente (2) um eine Originalkomponente des Kraftfahrzeugs (4) oder um eine nicht autorisiert ausgetauschte und/oder nicht autorisiert manipulierte Funktionskomponente (2) handelt,
eine Durchführung einer Zustandsabfrage einer eine unbefugte Inbetriebnahme des Kraftfahrzeugs (4) verhindernden Einrichtung (6) erfolgt und
die Durchführung einer Authentifizierung wenigstens einer für den Fahrbetrieb des Kraftfahrzeugs (4) sicherheits- und/oder emissionsrelevanten Funktionskomponente (1) im Hinblick darauf, ob es sich bei der Funktionskomponente (1) um eine Originalkomponente des Kraftfahrzeugs (4) oder um eine nicht autorisiert ausgetauschte und/oder nicht autorisiert manipulierte Funktionskomponente (1) handelt, oder die Durchführung einer Authentifizierung wenigstens einer für sicherheitsrelevante und/oder gesetzliche Vorgaben unabhängig von dem Fahrbetrieb des Kraftfahrzeugs (4) relevanten Funktionskomponente (2) des Kraftfahrzeugs (4) im Hinblick darauf, ob es sich bei der Funktionskomponente (2) um eine Originalkomponente des Kraftfahrzeugs (4) oder um eine nicht autorisiert ausgetauschte und/oder nicht autorisiert manipulierte Funktionskomponente (2) handelt,
erst erfolgt, wenn die Zustandsabfrage ergibt, dass keine unbefugte Inbetriebnahme des Kraftfahrzeugs (4) gegeben ist.

5. Verfahren nach einem der vorangehenden Ansprüche,
**dadurch gekennzeichnet,**
**dass** eine Multimediaeinrichtung zur Ausgabe von Multimediainhalten in den Innenraum des Kraftfahrzeugs (4) oder an einen Kommunikationspartner, eine Kommunikationseinrichtung zur Herstellung einer Kommunikationsverbindung zwischen einem kraftfahrzeugseitigen Steuergerät und einem Kommunikationspartner, insbesondere einem fahrzeuginsassenseitigen mobilen Endgerät, eine Klimaeinrichtung zur Klimatisierung zumindest eines Bereichs des Innenraums des Kraftfahrzeugs (4), eine Sitzverstelleinrichtung zur Verstellung wenigstens einer Ausrichtung und/oder Position wenigstens eines Sitzteils des Kraftfahrzeugs (4) relativ zu wenigstens einem anderen Sitzteil des Kraftfahrzeugs (4), eine Sitztemperiereinrichtung zur Temperierung wenigstens eines Sitzteils des Kraftfahrzeugs (4), eine Lenkradtemperiereinrichtung zur Temperierung wenigstens eines Lenkradteils des Kraftfahrzeugs (4), eine Beleuchtungseinrichtung zur Beleuchtung des Innenraums des Kraftfahrzeugs (4), oder ein Parkassistenzsystem zur Durchführung zumindest teilautomatisierter Parkvorgänge des Kraftfahrzeugs (4) als wenigstens eine für den Fahrbetrieb des Kraftfahrzeugs (4) nicht sicherheitsrelevante Funktionskomponente (3) gezielt in ihrer oder wenigstens einer Funktionalität beschränkt wird, sofern die durchgeführte Authentifizierung ergibt, dass die wenigstens eine für den Fahrbetrieb des Kraftfahrzeugs (4) sicherheits- und/oder emissionsrelevante Funktionskomponente (1) des Kraftfahrzeugs (4) nicht autorisiert ausgetauscht und/oder nicht autorisiert manipuliert ist.

6. Verfahren nach einem der vorangehenden Ansprüche,
**dadurch gekennzeichnet,**
**dass** als wenigstens eine andere Funktionskomponente des Kraftfahrzeugs (4) eine weitere für den Fahrbetrieb des Kraftfahrzeugs (4) emissionsrelevante Funktionskomponente (1) gezielt in ihrer oder wenigstens einer Funktionalität beschränkt wird, sofern die durchgeführte Authentifizierung ergibt, dass die wenigstens eine für den Fahrbetrieb des Kraftfahrzeugs (4) sicherheits- und/oder emissionsrelevante Funktionskomponente (1) des Kraftfahrzeugs (4) nicht autorisiert ausgetauscht und/oder nicht autorisiert manipuliert ist.

7. Verfahren nach Anspruch 6,
**dadurch gekennzeichnet,**
**dass** vor einer Beschränkung der oder wenigstens einer Funktionalität einer weiteren für den Fahrbetrieb des Kraftfahrzeugs (4) emissionsrelevanten Funktionskomponente (1) eine eine bevorstehende Beschränkung der weiteren für den Fahrbetrieb des Kraftfahrzeugs (4) emissionsrelevanten Funktionskomponente (1) beschreibende Beschränkungsinformation an wenigstens einen Fahrzeuginsassen, insbesondere einen Fahrer, ausgegeben wird.

8. Verfahren nach Anspruch 6 oder 7,
**dadurch gekennzeichnet,**
**dass** ein den Fahrbetrieb mittelbar oder unmittelbar steuerndes Assistenzsystem, insbesondere ein Assistenzsystem zur zumindest teilautomatisierten Längs- und/oder Querführung des Kraftfahrzeugs (4), als eine weitere für den Fahrbetrieb des Kraftfahrzeugs (4) emissionsrelevante Funktionskomponente (1) gezielt in ihrer oder wenigstens einer Funktionalität beschränkt wird, sofern die durchgeführte Authentifizierung ergibt, dass die wenigstens eine für den Fahrbetrieb des Kraftfahrzeugs (4) sicherheits- und/oder emissionsrelevante Funktionskomponente (1) des Kraftfahrzeugs (4) nicht autorisiert ausgetauscht und/oder nicht autorisiert manipuliert ist.

9. Verfahren nach einem der vorangehenden Ansprüche,
**dadurch gekennzeichnet,**
**dass**, sofern bei der Durchführung der Authentifizierung kein Authentifizierungsergebnis erstellt werden kann, eine bestimmte Anzahl an Authentifizierungsversuchen durchgeführt, wobei die oder wenigstens eine Funktionalität der wenigstens einen anderen Funktionskomponente (2, 3) des Kraftfahrzeugs (4) gezielt beschränkt wird, sofern nach der Durchführung der bestimmten Anzahl an Authentifizierungsversuchen kein Authentifizierungsergebnis erstellt wurde.

10. Verfahren nach einem der vorangehenden Ansprüche,
**dadurch gekennzeichnet,**
**dass** die oder wenigstens eine Funktionalität der wenigstens einen anderen Funktionskomponente (2, 3) des Kraftfahrzeugs (4) gezielt beschränkt wird, sofern bei der Durchführung der Authentifizierung innerhalb einer bestimmten Zeitspanne kein Authentifizierungsergebnis erstellt wurde.

11. Verfahren nach einem der vorangehenden Ansprüche,
**dadurch gekennzeichnet,**
**dass** als zur Durchführung einer Authentifizierung wenigstens einer für den Fahrbetrieb des Kraftfahrzeugs (4) sicherheits- und/oder emissionsrelevanten Funktionskomponente (1) des Kraftfahrzeugs (4) im Hinblick darauf, ob es sich bei der Funktionskomponente (1) um eine Originalkomponente des Kraftfahrzeugs (4) oder um eine nicht autorisiert ausgetauschte und/oder nicht autorisiert manipulierte Funktionskomponente (1) handelt, ein, insbesondere mit einem Antriebsaggregat des Kraftfahrzeugs (4) verbundener, elektrischer Energiespeicher des Kraftfahrzeugs (4) verwendet wird.

12. Kraftfahrzeug (4), umfassend mehrere unterschiedliche Funktionskomponenten (1, 2, 3) und eine Steuereinrichtung (5), welche gemäß dem Verfahren nach einem der vorangehenden Ansprüche, zur
- Durchführung einer Authentifizierung wenigstens einer für den Fahrbetrieb des Kraftfahrzeugs (4) sicherheits- und/oder emissionsrelevanten Funktionskomponente (1) im Hinblick darauf, ob es sich bei der Funktionskomponente (1) um eine Originalkomponente des Kraftfahrzeugs (4) oder um eine nicht autorisiert ausgetauschte und/oder nicht autorisiert manipulierte Funktionskomponente (1) handelt, eingerichtet ist **gekennzeichnet durch**
- Steuerung des Betriebs wenigstens einer anderen Funktionskomponente (2, 3) des Kraftfahrzeugs (4) derart, dass die oder wenigstens eine Funktionalität der wenigstens einen anderen Funktionskomponente (2, 3) gezielt beschränkt wird, sofern die durchgeführte Authentifizierung ergibt, dass die wenigstens eine für den Fahrbetrieb des Kraftfahrzeugs (4) sicherheits- und/oder emissionsrelevante Funktionskomponente (1) des Kraftfahrzeugs (4) nicht autorisiert ausgetauscht und/oder nicht autorisiert manipuliert ist, wobei die andere Funktionskomponente (3) eine für den Fahrbetrieb des Kraftfahrzeugs (4) nicht sicherheitsrelevante Funktionskomponente ist.

## Claims

1. Method for the control of the operation of at least one functional component (1, 2, 3) of a motor vehicle (4),
with the step
- Implementation of an authentication of at least one functional component (1) relevant to the safety and/or emissions of the driving operation of the motor vehicle (4) with regard to whether the functional component (1) is an original component of the motor vehicle (4) or an unauthorisedly exchanged and/or unauthorisedly manipulated functional component (1),
**characterised by** the following step:
- Control of the operation of at least one other functional component (2, 3) of the motor vehicle (4) in such a way that the or at least one functionality of the at least one other functional component (2, 3) is systematically restricted, provided that the implemented authentication shows that the at least one functional component (1) relevant to the safety and/or emissions of the driving operation of the motor vehicle (4) has been unauthorisedly exchanged and/or unauthorisedly manipulated, whereby the other functional component (3) is not a functional component relevant to the safety of the driving operation of the motor vehicle (4).

2. Method according to claim 1,
**characterised**
**in that** prior to the implementation of an authentication of at least one functional component (1) relevant to the safety and/or emissions of the driving operation of the motor vehicle (4), with regard to whether the functional component (1) is an original component of the motor vehicle (4) or an unauthorisedly exchanged and/or unauthorisedly manipulated functional component (1),
an authentication should be implemented of at least one functional component (2) of the motor vehicle (4) relevant to the safety and/or legal requirements independent of the driving operation of the motor vehicle (4) with regard to whether the functional component (2) is an original component of the motor vehicle (4) or is an unauthorisedly exchanged and/or unauthorisedly manipulated functional component (2).

3. Method according to claim 2,
**characterised**
**in that** a control of the operation of the at least one functional component (2) relevant to the safety and/or legal requirements independent of the driving operation of the motor vehicle (4) and/or at least one other functional component (3) of the motor vehicle (4) such that the or at least one functionality of the at least one functional component (2) relevant to safety and/or legal requirements independent of the driving operation of the motor vehicle (4) and/or the at least one other functional component (3) is systematically restricted in its operation, provided that the implemented authentication shows that the at least one functional component (2) relevant to safety and/or legal requirements independent of the driving operation of the motor vehicle (4) has been unauthorisedly exchanged and/or unauthorisedly manipulated.

4. Method according to any of the preceding claims,
**characterised**
**in that** prior to the implementation of an authentication of at least one functional component (1) relevant to the safety and/or emissions of the driving operation of the motor vehicle (4) with regard to whether the functional component (1) is an original component of the motor vehicle (4) or an unauthorisedly exchanged and/or unauthorisedly manipulated functional component (1), or
prior to the implementation of an authentication of at least one functional component (2) of the motor vehicle (4) relevant to the safety and/or legal requirements independent of the driving operation of the motor vehicle (4) with regard to whether the functional component (2) is an original component of the motor vehicle (4) or is an unauthorisedly exchanged and/or unauthorisedly manipulated functional component (2),
an implementation of a status inquiry of a device (6) preventing an unauthorised operation of the motor vehicle (4) is executed and
the implementation of an authentication of at least one functional component (1) relevant to the safety and/or emissions of the driving operation of the motor vehicle (4) with regard to whether the functional component (1) is an original component of the motor vehicle (4) or an unauthorisedly exchanged and/or unauthorisedly manipulated functional component (1), or
the implementation of an authentication of at least one functional component (2) of the motor vehicle (4) relevant to safety and/or legal requirements independent of the driving operation of the motor vehicle (4) with regard to whether the functional component (2) is an original component of the motor vehicle (4) or is an unauthorisedly exchanged and/or unauthorisedly manipulated functional component (2),
is only executed following the status inquiry showing that no unauthorised operation of the motor vehicle (4) has taken place.

5. Method according to any of the preceding claims,
**characterised,**
**in that** a multimedia device for outputting multimedia content into the interior of the motor vehicle (4) or to a communication partner; a communication device for establishing a communication connection between a control unit in the motor vehicle and a communication partner, in particular a mobile terminal device of an occupant of the motor vehicle; an air conditioning device for air conditioning at least a portion of the motor vehicle (4); a seat adjusting device for adjusting at least one orientation and/or position of at least one seat part of the motor vehicle (4) relative to at least one other seat part of the motor vehicle (4); a seat temperature control system for temperature control of at least one seat part of the motor vehicle (4); a steering wheel temperature control system for temperature control of at least one steering wheel part of the motor vehicle (4); a lighting device for illuminating the interior of the motor vehicle (4); or a parking assistance system for performing at least partially automated parking operations of the motor vehicle (4), is systematically restricted in its or at least one functionality, as being the at least one functional component (3) not relevant to the safety of the driving operation of the motor vehicle (4), provided that the implemented authentication shows that the at least one functional component (1) of the motor vehicle (4) relevant to the safety and/or emissions of the driving operation of the motor vehicle (4) has been unauthorisedly exchanged and/or unauthorisedly manipulated.

6. Method according to any of the preceding claims,
**characterised**
**in that** a further functional component (1) relevant to the emissions of the driving operation of the motor vehicle (4) is systematically restricted in its or at least one functionality, as being the at least one other functional component of the motor vehicle (4), provided that the implemented authentication shows that the at least one functional component (1) of the motor vehicle (4) relevant to the safety and/or emissions of the driving operation of the motor vehicle (4) has been unauthorisedly exchanged and/or unauthorisedly manipulated.

7. Method according to claim 6,
**characterised**
**in that** prior to a limitation of the or at least one functionality of a further functional component (1) relevant to the emissions of the driving operation of the motor vehicle (4), restriction information describing an imminent restriction of the further functional component (1) relevant to the emissions of the driving operation of the motor vehicle (4) is issued to at least one vehicle occupant, in particular a driver.

8. Method according to claim 6 or 7,
**characterised**
**in that** an assistance system which directly or indirectly controls the driving operation, in particular an assistance system for the at least partially automated longitudinal and/or lateral guidance of the motor vehicle (4), is systematically restricted in its or at least one functionality, as being a further functional component (1) relevant to the emissions of the driving operations of the motor vehicle (4), provided that the implemented authentication reveals that the at least one functional component (1) of the motor vehicle (4) relevant to the safety and/or emissions of the driving operation of the motor vehicle (4) has not been unauthorisedly exchanged and/or unauthorisedly manipulated.

9. Method according to any of the preceding claims,
**characterised**
**in that**, provided that no authentication result can be created with the implementation of the authentication, a determined number of authentication attempts are performed, wherein the or at least one functionality of the at least one other functional component (2, 3) of the motor vehicle (4) is systematically restricted, provided that no authentication result has been created after the implementation of a determined number of authentication attempts.

10. Method according to any of the preceding claims,
**characterised**
**in that** the or at least one functionality of the at least one other functional component (2, 3) of the motor vehicle (4) is systematically restricted, provided that no authentication result was created during the implementation of the authentication within a certain period of time.

11. Method according to any of the preceding claims,
**characterised**
**in that** an electrical energy storage system of the motor vehicle (4), in particular one connected with a drive unit of the motor vehicle (4), is used for the implementation of an authentication of at least one functional component (1) of the motor vehicle (4) relevant to the safety and/or emissions of the driving operation of the motor vehicle (4) with regard to whether the functional component (1) is an original component of the motor vehicle (4) or an unauthorisedly exchanged and/or unauthorisedly manipulated functional component (1).

12. Motor vehicle (4), comprising a plurality of different functional components (1, 2, 3) and a control device (5), as defined in the method according to any of the preceding claims, for
- The configuration of an implementation of an authentication of at least one functional component (1) relevant to the safety and/or emissions of the driving operation of the motor vehicle (4) with regard to whether the functional component (1) is an original component of the motor vehicle (4) or is an unauthorisedly exchanged and/or unauthorisedly manipulated functional component (1), **characterised by**
- The control of the operation of at least one other functional component (2, 3) of the motor vehicle (4) in such a way that the or at least one functionality of the at least one other functional component (2, 3) is systematically restricted, provided that the implemented authentication shows that the at least one functional component (1) of the motor vehicle (4) relevant to the safety and/or emissions of the driving operation of the motor vehicle (4) has been unauthorisedly exchanged and/or unauthorisedly manipulated,
wherein the other functional component (3) is a functional component not relevant to the safety of the driving operation of the motor vehicle (4).

## Revendications

1. Procédé servant à commander le fonctionnement d'au moins un composant fonctionnel (1, 2, 3) d'un véhicule automobile (4), avec l'étape :
- d'exécution d'une authentification d'au moins un composant fonctionnel (1) important en matière de sécurité et/ou d'émission pour le mode de déplacement du véhicule automobile (4) pour savoir si le composant fonctionnel (1) est un composant d'origine du véhicule automobile (4) ou un composant fonctionnel (1) remplacé de manière non autorisée et/ou manipulé de manière non autorisée,
**caractérisé par** l'étape suivante :
- la commande du fonctionnement d'au moins un autre composant fonctionnel (2, 3) du véhicule automobile (4) de telle manière que la ou au moins une fonctionnalité de l'au moins un autre composant fonctionnel (2, 3) est limitée de manière ciblée dans la mesure où il découle de l'authentification exécutée que l'au moins un composant fonctionnel (1) important en matière de sécurité et/ou d'émission pour le mode de déplacement du véhicule automobile (4) est remplacé de manière non autorisée et/ou manipulé de manière non autorisée, dans lequel l'autre composant fonctionnel (3) est un composant fonctionnel sans importance en matière de sécurité pour le mode de déplacement du véhicule automobile (4).

2. Procédé selon la revendication 1,
**caractérisé en ce**
**qu'**avant l'exécution d'une authentification d'au moins un composant fonctionnel (1) important en matière de sécurité et/ou d'émission pour le mode de déplacement du véhicule automobile (4) pour savoir si le composant fonctionnel (1) est un composant d'origine du véhicule automobile (4) ou un composant fonctionnel (1) remplacé de manière non autorisée et/ou manipulé de manière non autorisée,
une exécution d'une authentification d'au moins un composant fonctionnel (2), important pour des dispositions importantes en matière de sécurité et/ou légales indépendamment du mode de déplacement du véhicule automobile (4), du véhicule automobile (4) pour savoir si le composant fonctionnel (2) est un composant d'origine du véhicule automobile (4) ou un composant fonctionnel (2) remplacé de manière non autorisée et/ou manipulé de manière non autorisée, est effectuée.

3. Procédé selon la revendication 2,
**caractérisé en ce**
**qu'**une commande du fonctionnement de l'au moins un composant fonctionnel (2) important pour des dispositions importantes en matière de sécurité et/ou légales indépendamment du mode de déplacement du véhicule automobile (4) et/ou d'au moins un autre composant fonctionnel (3) du véhicule automobile (4) telle que la ou au moins une fonctionnalité de l'au moins un composant fonctionnel (2) important pour des dispositions importantes en matière de sécurité et/ou légales indépendamment du mode de déplacement du véhicule automobile (4) et/ou de l'au moins un autre composant fonctionnel (3) est limitée de manière ciblée dans la mesure où il découle de l'authentification exécutée que l'au moins un composant fonctionnel (2) important pour des dispositions importantes en matière de sécurité et/ou légale indépendamment du mode de déplacement du véhicule automobile (4) est remplacé de manière non autorisée et/ou manipulé de manière non autorisée.

4. Procédé selon l'une quelconque des revendications précédentes,
**caractérisé en ce**
**qu'**avant l'exécution d'une authentification d'au moins un composant fonctionnel (1) important en matière de sécurité et/ou d'émission pour le mode de déplacement du véhicule automobile (4) pour savoir si le composant fonctionnel (1) est un composant d'origine du véhicule automobile (4) ou un composant fonctionnel (1) remplacé de manière non autorisée et/ou manipulé de manière non autorisée, ou
**qu'**avant l'exécution d'une authentification d'au moins un composant fonctionnel (2), important concernant des dispositions en matière de sécurité et/ou légales indépendamment du mode de déplacement du véhicule automobile (4), du véhicule automobile (4) pour savoir si le composant fonctionnel (2) est un composant d'origine du véhicule automobile (4) ou un composant fonctionnel (2) remplacé de manière non autorisée et/ou manipulé de manière non autorisée,
une exécution d'une consultation d'état d'un équipement (6) empêchant une mise en service non autorisée du véhicule automobile (4) est effectuée, et
l'exécution d'une authentification d'au moins un composant fonctionnel (1) important en matière de sécurité et/ou d'émission pour le mode de déplacement du véhicule automobile (4) pour savoir si le composant fonctionnel (1) est un composant d'origine du véhicule automobile (4) ou un composant fonctionnel (1) remplacé de manière non autorisée et/ou manipulé de manière non autorisée, ou
l'exécution d'une authentification d'au moins un composant fonctionnel (2), important pour des dispositions en matière de sécurité et/ou légales indépendamment du mode de déplacement du véhicule automobile (4), du véhicule automobile (4) pour savoir si le composant fonctionnel (2) est un composant d'origine du véhicule automobile (4) ou un composant fonctionnel (2) remplacé de manière non autorisée et/ou manipulé de manière non autorisée,
est effectuée seulement quand il découle de la consultation d'état qu'il n'existe aucune mise en service non autorisée du véhicule automobile (4).

5. Procédé selon l'une quelconque des revendications précédentes,
**caractérisé en ce**
**qu'**un équipement multimédia servant à envoyer des contenus multimédias dans l'habitacle du véhicule automobile (4) ou à un élément de communication, un équipement de communication servant à établir une liaison de communication entre un appareil de commande côté véhicule automobile et un élément de communication, en particulier un terminal mobile côté passager de véhicule, un équipement de climatisation servant à climatiser au moins une zone de l'habitacle du véhicule automobile (4), un équipement d'ajustement de siège servant à ajuster au moins une orientation et/ou position d'au moins une partie de siège du véhicule automobile (4) par rapport à au moins une autre partie de siège du véhicule automobile (4), un équipement de thermorégulation de siège servant à thermoréguler au moins une partie de siège du véhicule automobile (4), un équipement de thermorégulation de volant servant à thermoréguler au moins une partie de volant du véhicule automobile (4), un équipement d'éclairage servant à éclairer l'habitacle du véhicule automobile (4) ou un système d'assistance au stationnement servant à exécuter au moins de manière partiellement automatisée des manoeuvres de stationnement du véhicule automobile (4) sont, en tant qu'au moins un composant fonctionnel (3) sans importance en matière de sécurité pour le mode de déplacement du véhicule automobile (4), limités de manière ciblée dans leur ou au moins une fonctionnalité dans la mesure où il découle de l'authentification exécutée que l'au moins un composant fonctionnel (1), important en matière de sécurité et/ou d'émission pour le mode de déplacement du véhicule automobile (4), du véhicule automobile (4) est remplacé de manière non autorisée et/ou manipulé de manière non autorisée.

6. Procédé selon l'une quelconque des revendications précédentes,
**caractérisé en ce**
**qu'**en tant qu'au moins un autre composant fonctionnel du véhicule automobile (4), un autre composant fonctionnel (1) important en matière d'émission pour le mode de déplacement du véhicule automobile (4) est limité de manière ciblée dans son ou au moins une fonctionnalité dans la mesure où il découle de l'authentification exécutée que l'au moins un composant fonctionnel (1), important en matière de sécurité et/ou d'émission pour le mode de déplacement du véhicule automobile (4), du véhicule automobile (4) est remplacé de manière non autorisée et/ou manipulé de manière non autorisée.

7. Procédé selon la revendication 6,
**caractérisé en ce**
**qu'**avant une limitation de la ou d'au moins une fonctionnalité d'un autre composant fonctionnel (1) important en matière d'émission pour le mode de déplacement du véhicule automobile (4), une information de limitation décrivant une limitation imminente de l'autre composant fonctionnel (1) important en matière d'émission pour le mode de déplacement du véhicule automobile (4) est envoyée à au moins un passager de véhicule, en particulier à un conducteur.

8. Procédé selon la revendication 6 ou 7,
**caractérisé en ce**
**qu'**un système d'assistance commandant indirectement ou directement le mode de déplacement, en particulier un système d'assistance servant au pilotage en longueur et/ou transversal au moins partiellement automatisé du véhicule automobile (4) est limité en tant qu'un autre composant fonctionnel (1) important en matière émission pour le mode de déplacement du véhicule automobile (4) de manière ciblée dans sa ou au moins une fonctionnalité, dans la mesure où il découle de l'authentification exécutée que l'au moins un composant fonctionnel (1), important en matière de sécurité et/ou d'émission pour le mode de déplacement du véhicule automobile (4), du véhicule automobile (4) est remplacé de manière non autorisée et/ou manipulé de manière non autorisée.

9. Procédé selon l'une quelconque des revendications précédentes,
**caractérisé en ce**
**que**, dans la mesure où lors de l'exécution de l'authentification, aucun résultat d'authentification ne peut être établi, un certain nombre de tentatives d'authentification est exécuté, dans lequel la ou au moins une fonctionnalité de l'au moins un autre composant fonctionnel (2, 3) du véhicule automobile (4) est limitée de manière ciblée dans la mesure où après l'exécution du nombre défini de tentatives d'authentification, aucun résultat d'authentification n'a été établi.

10. Procédé selon l'une quelconque des revendications précédentes,
**caractérisé en ce**
**que** la ou au moins une fonctionnalité de l'au moins un autre composant fonctionnel (2, 3) du véhicule automobile (4) est limitée de manière ciblée dans la mesure où aucun résultat d'authentification n'a été établi lors de l'exécution de l'authentification dans un laps de temps défini.

11. Procédé selon l'une quelconque des revendications précédentes,
**caractérisé en ce**
**qu'**un accumulateur d'énergie électrique, relié en particulier à un groupe d'entraînement du véhicule automobile (4), du véhicule automobile (4) est utilisé aux fins de l'exécution d'une authentification d'au moins un composant fonctionnel (1), important en matière de sécurité et/ou d'émission pour le mode de déplacement du véhicule automobile (4), du véhicule automobile (4) pour savoir si le composant fonctionnel (1) est un composant d'origine du véhicule automobile (4) ou un composant fonctionnel (1) remplacé de manière non autorisée et/ou manipulé de manière non autorisée.

12. Véhicule automobile (4) comprenant plusieurs composants fonctionnels (1, 2, 3) différents et un équipement de commande (5), qui est mis au point selon le procédé selon l'une quelconque des revendications précédentes pour
- exécuter une authentification d'au moins un composant fonctionnel (1) important en matière de sécurité et/ou d'émission pour le mode de déplacement du véhicule automobile (4) pour savoir si le composant fonctionnel (1) est un composant d'origine du véhicule automobile (4) ou un composant fonctionnel (1) remplacé de manière non autorisée et/ou manipulé de manière non autorisée,
**caractérisé par**
- la commande du fonctionnement d'au moins un autre composant fonctionnel (2, 3) du véhicule automobile (4) de telle manière que la ou au moins une fonctionnalité de l'au moins un autre composant fonctionnel (2, 3) est limitée de manière ciblée dans la mesure où il découle de l'authentification exécutée que l'au moins un composant fonctionnel (1), important en matière de sécurité et/ou d'émission pour le mode de déplacement du véhicule automobile (4), du véhicule automobile (4) est remplacé de manière non autorisée et/ou manipulé de manière non autorisée,
dans lequel l'autre composant fonctionnel (3) est un composant fonctionnel sans importance en matière de sécurité pour le mode de déplacement du véhicule automobile (4).
